# EUROPÄISCHE PATENTSCHRIFT

(11) **EP 1 266 545 B1**
(45) Veröffentlichungstag und Bekanntmachung des Hinweises auf die Patenterteilung: **02.01.2004**
(21) Anmeldenummer: 01925377.2
(22) Anmeldetag: 06.03.2001
(51) Int. Cl.: H05B 39/04, H02M 3/337

(54) **ELEKTRONISCHER TRANSFORMATOR**
ELECTRONIC TRANSFORMER
TRANSFORMATEUR ELECTRONIQUE

(30) Priorität: 14.03.2000 DE 10012363
(43) Veröffentlichungstag der Anmeldung: 18.12.2002
(73) Patentinhaber: TridonicAtco GmbH & Co. KG, 6851 Dornbirn (AT)
(72) Erfinder: MAIR, Alexander, A-2285 Breitstetten (AT); STUDER, Heinz, A-6721 Blons (AT)
(74) Vertreter: Rupp, Christian, Dipl.-Phys.
(86) Internationale Anmeldenummer: PCT/EP2001/002510
(87) Internationale Veröffentlichungsnummer: WO 2001/069983

(56) Entgegenhaltungen:
- WO-A-92/13385
- DE-A- 4 126 544
- DE-A- 4 243 957
- DE-A- 4 433 552
- DE-A- 19 543 720
- DE-U- 29 517 392
- US-A- 4 922 397

## Beschreibung

Die vorliegende Erfindung betrifft einen elektronischen Transformator bzw. einen elektronischen Konverter zum Betreiben mindestens einer Niedervolt-Halogenlampe nach dem Oberbegriff des Anspruches 1.

Das Grundprinzip derartiger elektronischer Transformatoren ist aus C.H.Sturm/E.Klein "Betriebsgeräte und Schaltungen für elektrische Lampen", Siemens Aktiengesellschaft, 1992, Seiten 295 ff bekannt, sowohl als aus der DE 4 126 544 Ihr allgemeiner Aufbau sowie die Funktionsweise ist in Fig. 3 dargestellt. Zunächst weist der elektronische Transformator ein Oberwellenfilter 1 zur Funkentstörung auf, welches eingangsseitig an eine Wechselspannungsquelle angeschlossen ist, die im vorliegenden Beispiel eine Versorgungswechselspannung mit einer Frequenz von 50Hz abgibt. Mit dem Oberwellenfilter 1 ist eine Gleichrichterschaltung 2 verbunden, beispielsweise eine einfache Diodenschaltung, welche die Versorgungswechselspannung gleichrichtet. Die von der Gleichrichterschaltung 2 erzeugte gleichgerichtete Zwischenkreisspannung wird schließlich einem Wechselrichter 3 zugeführt, der üblicherweise zwei in einer Halbbrückenschaltung angeordnete Schalter - beispielsweise Leistungstransistoren - aufweist, die nach einem bestimmten Schema abwechselnd ein- und ausgeschaltet werden, so daß sich auf diese Weise eine in Rechteckblöcke zerhackte Spannung ergibt, die mit der gleichgerichteten Netzspannung moduliert ist. Die so erzeugte Wechselspannung wird mittels eines Übertragers 4 auf einen ausgangsseitigen Lastkreis übertragen und dabei auf eine für die in dem Lastkreis angeordnete Niedervolt-Halogenlampe L notwendige Kleinspannung transformiert. Ferner befindet sich in dem Lastkreis eine weitere Schaltung 5 zum Gleichrichten sowie ein Filter 6 zum Glätten der übertragenen Wechselspannung.

Neben ihrer Grundfunktion - die von dem Versorgungsnetz gelieferte Spannung auf eine für die Niedervolt-Halogenlampe geeignete Kleinspannung umzusetzen - bieten elektronische Transformatoren auch die Möglichkeit, die Lampe gedimmt zu betreiben. Das zum Dimmen am weitesten verbreitete Verfahren ist die sog. Phasenanschnitts- bzw. Phasenabschnittssteuerung, bei der die beiden Schalter des Wechselrichters entsprechend dem gewünschten Dimmgrad während einer Halbwelle der gleichgerichteten Versorgungswechselspannung nur für einen bestimmten Zeitraum getaktet werden. Bei diesem sog. internen Dimmen von elektronischen Transformatoren können allerdings aufgrund des Phasenanschnitts bzw. Phasenabschnitts hohe Spannungssprünge auftreten, die wiederum - da sie eine der Versorgungswechselspannung entsprechende Frequenz aufweisen - zu deutlich hörbaren Geräuschen führen können.

Es ist daher Aufgabe der vorliegenden Erfindung, einen elektronischen Transformator zum Betreiben mindestens einer Niedervolt-Halogenlampe anzugeben, bei dem ein geräuschloses Dimmen der Lampe ermöglicht wird.

Diese Aufgabe wird durch einen elektronischen Transformator gemäß Anspruch 1 bzw. durch ein Verfahren zum Betreiben einer Niedervolt-Halogenlampe gemäß Anspruch 6 gelöst. Erfindungsgemäß erfolgt das Dimmen dadurch, daß das Tastverhältnis für die beiden Schalter des Wechselrichters verändert wird, indem die Totzeit zwischen dem Öffnen (Ausschalten) eines der beiden Schalter und dem folgenden Schließen (Einschalten) des anderen Schalters konstant bleibt und die Einschaltzeit jeweils verkürzt wird. Mit diesem Verfahrens, bei dem die beiden Schalter des Wechselrichters fortwährend getaktet werden, können die bei einer Phasenanschnitt- bzw. Phasenabschnittssteuerung auftretenden hohen Spannungssprünge vermieden werden. Lediglich die Schaltfrequenzen für die beiden Schalter werden derart verändert, daß sich an der Ausgangsseite des Übertragers eine dem gewünschten Dimmgrad entsprechende reduzierte effektive Spannung einstellt.

Im Vergleich zu den anderen Dimmverfahren werden bei dem erfindungsgemäßen Verfahren beim Dimmen die Schaltfrequenzen durch das Reduzieren der Einschaltzeiten der Schalter erhöht, so daß die Möglichkeit besteht, die Halbbrückenschalter unabhängig von dem Grad des Dimmen in einem Frequenzbereich zu betreiben, der oberhalb der menschlichen Hörgrenze liegt und somit zu keinen Geräuschbelästigungen führt. Vorzugsweise werden die beiden Schalter in einem Frequenzbereich zwischen 35kHz - für den ungedimmten Zustand - und 300kHz - für eine maximale Dimmung - betrieben. Ferner werden die Schalter vorzugsweise derart angesteuert, daß ihr Tastverhältnis gleich ist.

Die Konstanthaltung der Totzeit eröffnet außerdem die Möglichkeit, die beiden Schalter des Wechselrichters derart anzusteuern, daß sie, unabhängig von dem eingestellten Dimmgrad, jeweils zu einem Zeitpunkt schalten, zu dem keine Spannung an ihnen anliegt. Dies entspricht dem sog. Nullpunktschalten bzw. zero voltage switch, bei dem Einschaltverluste vermieden werden. Somit wird durch die vorliegende Erfindung ein elektronischer Transformator zum Betreiben einer Niedervolt-Halogenlampe angegeben, der zum einen einen hohen Wirkungsgrad aufweist und zum anderen ein geräuschloses Dimmen der Lampe ermöglicht.

Es sei nach erwähnt, daß aus US 4 922 397 ein Dimmverfahren in einem DC-DC Wandler bekannt ist wobei die Einschaltzeiten der beiden Schalter konstant bleibt und die Totzeit zwischen dem Öffnen eines der beiden Schalter und dem folgenden Schließen des anderen Schalters variabel ist.

Im folgenden soll die Erfindung anhand der beiliegenden Zeichnungen beispielhaft näher erläutert werden. Es zeigen:
Fig. 1 den Wechselrichter, Übertrager und Lastkreis des erfindungsgemäßen elektronischen Transformators;
Fig. 2 das erfindungsgemäße Betakten der beiden Schalter des Wechselrichters; und

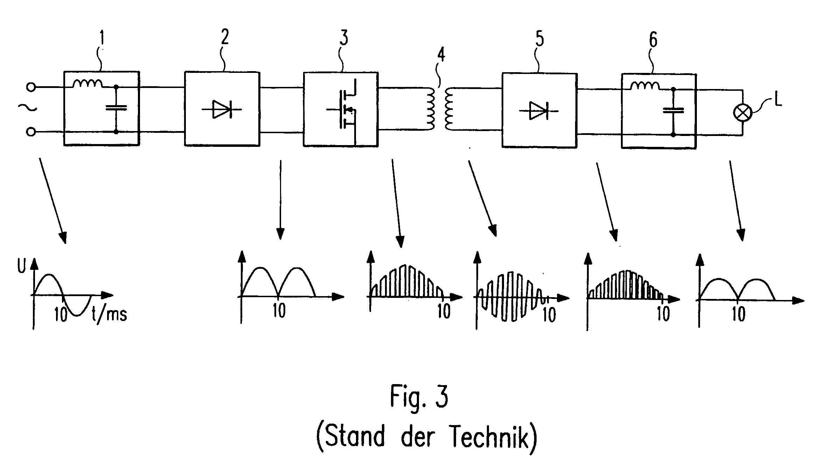

Fig. 3 den allgemeinen Aufbau eines elektronischen Transformators, wie er aus dem Stand der Technik bekannt ist.

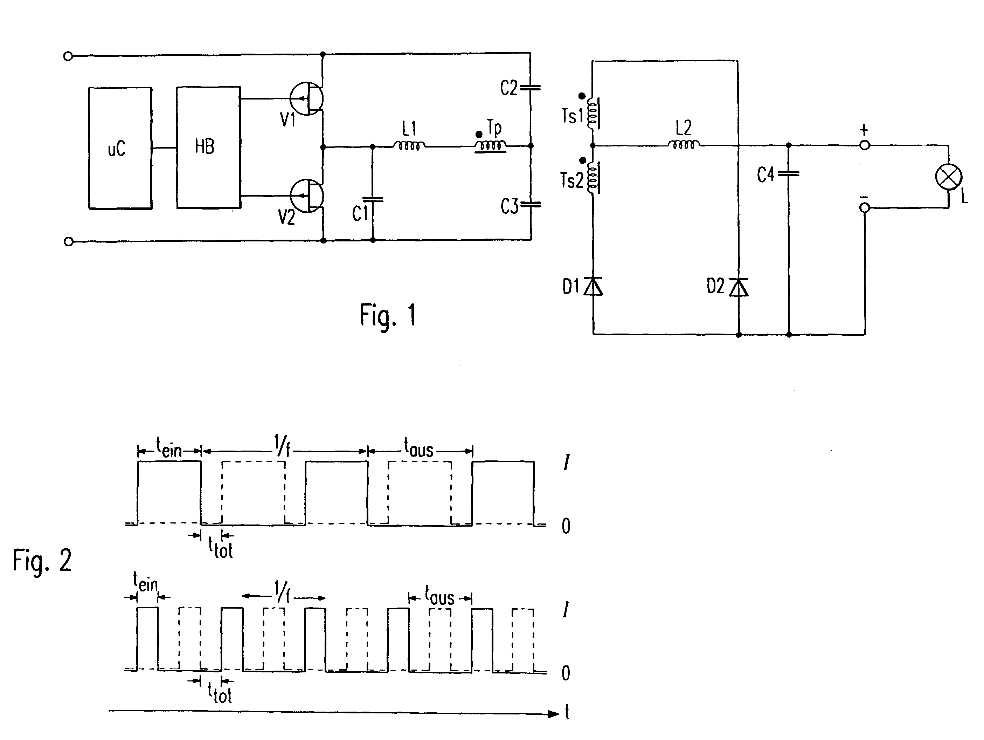

An den Eingang des in Fig. 1 dargestellten Wechselrichters wird die von dem (nicht dargestellten) Gleichrichter gleichgerichtete Versorgungswechselspannung angelegt. Das Ansteuern der beiden in einer Halbbrückenanordnung angeordneten Schalter V1 und V2, bei denen es sich um Leistungstransistoren oder Feldeffekttransistoren handelt, erfolgt durch einen Halbbrückentreiber HB, der wiederum von einer Steuerschaltung uC in Form eines Mikroprozessors gesteuert wird. Die beiden Schalter V1 und V2 werden abwechselnd ein- und ausgeschaltet, so daß an dem Verbindungspunkt zwischen den beiden Halbbrückenkondensatoren C2 und C3, die zu den beiden Feldeffekttransistoren V1 und V2 parallel geschaltet sind, eine rechteckförmige Spannung auftritt, die mit der gleichgerichteten und halbsinusförmigen Zwischenkreisspannung moduliert ist. Diese Wechselspannung wird durch die zwischen den Verbindungspunkten der beiden Schalter V1 und V2 sowie der beiden Zwischenkreiskondensatoren C2 und C3 angeordnete Primärwicklung Tp eines Übertragers auf den Lastkreis übertragen. Die Drossel L1 sorgt für die Kommutierung des Stromes auf der Sekundärseite, der Kondenstaor C1 unterdrückt hochfrequente Störungen.

In dem Lastkreis befinden sich zwei Sekundärwicklungen Ts1 und Ts2 des Übertragers, an deren gemeinsamen Knotenpunkt die Niedervolt-Halogenlampe L angeschlossen ist. Alternativ dazu kann auch eine einzige Sekundärwicklung mit einem Mittenabgriff vorgesehen sein. Zwischen den Sekundärwicklungen Ts1 und Ts2 und der Niedervolt-Halogenlampe L befindet sich ein durch eine Spule L2 und einen Kondensator C4 gebildetes und als Tiefpaß wirkendes LC-Glied zum Glätten der hochfrequenten Wechselspannung. Ferner weist der Lastkreis zwei Dioden D1 und D2 auf, die in Form eines Zweiweggleichrichters angeordnet sind, um die der Niedervolt-Halogenlampe L zugeführte Wechselspannung gleichzurichten.

Das erfindungsgemäße Ansteuern der beiden Halbbrückenschalter V1 und V2 soll im folgenden anhand von Fig. 2, welche die Schaltzustände der beiden Schalter für zwei verschiedene Dimmstufen darstellt, ausführlicher erläutert werden. Das obere Taktschema in Fig. 2 zeigt dabei die Schaltzustände der beiden Halbbrückenschalter im ungedimmten Zustand - in durchgezogener Linie für den Schalter V1 sowie in gestrichelter Linie für den Schalter V2 - während das untere Taktschema die Schaltzustände in einem gedimmten Zustand darstellt.

Wie bereits erläutert wurde, werden die beiden Schalter derart angesteuert, daß sie abwechselnd eingeschaltet bzw. leitend (Zustand 1) und ausgeschaltet bzw. nicht-leitend (Zustand 0) werden, wobei zwischen dem Öffnen eines Schalters und dem folgenden Schließen des anderen Schalters eine gewisse Totzeit tₜₒₜ verbleibt, in der beide Schalter ausgeschaltet sind. Durch diese Totzeit wird unter anderem sicher gestellt, daß kein Kurzschluß durch ein gleichzeitiges Schließen beider Schalter der Halbbrücke auftreten kann. Ferner kann damit allerdings auch erreicht werden, daß die beiden Schalter jeweils zu einem Zeitpunkt verlustlos einschalten, zu dem keine Spannung an ihnen anliegt, da es aufgrund der in der Schaltung enthaltenen Blindwiderstände eine gewisse Zeit dauert, bis sich die Spannungsverhältnisse umdrehen. Ein derartiges verlustloses Schalten wird auch als "zero switching loss" bzw. "zero voltage switch" bezeichnet und kann zu einer deutlichen Erhöhung des Wirkungsgrads führen.

Das Tastverhältnis für die beiden Schalter wird durch das Verhältnis zwischen der Einschaltzeit tₑᵢₙ und der Ausschaltzeit tₐᵤₛ bestimmt. Dabei wird für den oberen dargestellten ungedimmten Zustand ein möglichst hohes Tastverhältnis gewählt, das vorzugsweise einer Schaltfrequenz f von ca. 35kHz entspricht, wobei für die beiden Schalter das gleiche Tastverhältnis eingestellt wird.

Erfindungsgemäß erfolgt das Dimmen der Niedervolt-Halogenlampe dadurch, daß die Dauer der Totzeit tₜₒₜ beibehalten wird und lediglich die Einschaltzeit tₑᵢₙ für beide Schalter gleichermaßen reduziert wird. Als Folge davon wird die Schaltfrequenz f insgesamt erhöht, wie dies dem unteren Taktschema in Fig. 2 zu entnehmen ist. Wird beispielsweise im ungedimmten Zustand bei einer Frequenz von 35kHz eine ausgangsseitige Spannung von effektiv 12 Volt erreicht, so kann durch Erhöhen der Schaltfrequenz auf 300kHz eine Reduzierung der ausgangsseitige Spannung von 4 Volt effektiv erzielt werden, wodurch die Niedervolt-Halogenlampe auf ca. 1 % ihrer maximalen Lichtleistung eingestellt wird. Allgemein kann durch Erhöhung der Basisfrequenz, also der im ungedimmten Betrieb vorliegenden Frequenz, um den Faktor 7 bis 12 im wesentlichen der gesamte Dimmbereich für die Niedervolt-Halogenlampe umfaßt werden.

Im Gegensatz zu den bisher bekannten Verfahren, wird die Schaltfrequenz durch das Dimmen nochmals erhöht, so daß sie in einen Frequenzbereich verschoben wird, der weit von der menschlichen Hörgrenze entfernt ist. Da auch schon die im ungedimmten Zustand vorliegenden 35kHz im Ultraschallbereich liegen und daher in der Regel nicht wahrnehmbar sind, wird auf diese Weise ein einfaches und effektives Dimmen, das zu keiner Geräuschbelastung führt, realisiert. Da jedoch nach wie vor die Totzeit tₜₒₜ konstant gehalten wird, kann auch im gedimmten Zustand ein Nullpunktschalten für die beiden Halbbrückenschalter erreicht werden, so daß der erfindungsgemäße elektronische Transformator einen außerordentlich hohen Wirkungsgrad aufweist.

## Patentansprüche

1. Elektronischer Transformator zum Betreiben mindestens einer Niedervolt-Halogenlampe (L),
mit einem Wechselrichter (3) mit zwei ein- und ausschaltbaren Schaltern (V1, V2) zum Bereitstellen einer Ausgangs-Wechselspannung,
mit einer Steuerschaltung (uC) zum Steuern des Ein- und Ausschaltverhaltens der beiden Schalter (V1, V2) des Wechselrichters, und
mit einem Übertrager (4, Tp, Ts1, Ts2), der eingangsseitig mit dem Wechselrichter (3) verbunden ist und an den ausgangsseitig ein die mindestens eine Niedervolt-Halogenlampe (L) aufweisender Lastkreis angeschlossen ist,
**dadurch gekennzeichnet,**
**daß** die Steuerschaltung (uC) zum Dimmen der mindestens einen Niedervolt-Halogenlampe (L) das Tastverhältnis für beide Schalter (V1, V2) dadurch verändert, daß die Totzeit (tₜₒₜ) zwischen dem Öffnen eines der beiden Schalter (V1) und dem folgenden Schließen des anderen Schalters (V2) konstant bleibt und die Einschaltzeit (tₑᵢₙ) jeweils verkürzt wird.

2. Elektronischer Transformator nach Anspruch 1,
**dadurch gekennzeichnet,**
**daß** die Schaltfrequenzen der beiden Schalter (V1, V2) unabhängig von dem Grad des Dimmens oberhalb der menschlichen Hörgrenze liegen.

3. Elektronischer Transformator nach Anspruch 2,
**dadurch gekennzeichnet,**
**daß** die Schaltfrequenz der beiden Schalter (V1, V2) bei maximaler Dimmung etwa 10mal so groß ist wie die Schaltfrequenz im ungedimmten Betrieb.

4. Elektronischer Transformator nach Anspruch 3,
**dadurch gekennzeichnet,**
**daß** die Schaltfrequenzen der beiden Schalter (V1, V2) zwischen 35kHz und 300kHz liegen.

5. Elektronischer Transformator nach einem der vorherigen Ansprüche,
**dadurch gekennzeichnet,**
**daß** das Tastverhältnis für beide Schalter (V1, V2) gleich ist.

6. Verfahren zum Betreiben mindestens einer Niedervolt-Halogenlampe (L) mittels eines elektronischen Transformators, aufweisend
einen Wechselrichter (3) mit zwei ein- und ausschaltbaren Schaltern (V1, V2) zum Bereitstellen einer Ausgangs-Wechselspannung,
eine Steuerschaltung (uC) zum Steuern des Ein- und Ausschaltverhaltens der beiden Schalter (V1, V2) des Wechselrichters, und
einen Übertrager (4, Tp, Ts1, Ts2), der eingangsseitig mit dem Wechselrichter (3) verbunden ist und an den ausgangsseitig ein die mindestens eine Niedervolt-Halogenlampe (L) aufweisender Lastkreis angeschlossen ist,
**dadurch gekennzeichnet,**
**daß** zum Dimmen der mindestens einen Niedervolt-Halogenlampe (L) das Tastverhältnis für beide Schalter (V1, V2) dadurch verändert wird, daß die Totzeit (tₜₒₜ) zwischen dem Öffnen eines der beiden Schalter (V1) und dem folgenden Schließen des anderen Schalters (V2) konstant bleibt und die Einschaltzeit (tₑᵢₙ) jeweils verkürzt wird.

7. Verfahren nach Anspruch 6,
**dadurch gekennzeichnet,**
**daß** die Schaltfrequenzen der beiden Schalter (V1, V2) unabhängig von dem Grad des Dimmens oberhalb der menschlichen Hörgrenze liegen.

8. Verfahren nach Anspruch 6 oder 7,
**dadurch gekennzeichnet,**
**daß** die Schaltfrequenz der beiden Schalter (V1, V2) bei maximaler Dimmung etwa 10mal so groß ist wie die Schaltfrequenz im ungedimmten Betrieb.

9. Verfahren nach Anspruch 8,
**dadurch gekennzeichnet,**
**daß** die Schaltfrequenzen der beiden Schalter (V1, V2) zwischen 35kHz und 300kHz liegen.

10. Verfahren nach einem der Ansprüche 5 bis 9,
**dadurch gekennzeichnet,**
**daß** das Tastverhältnis für beide Schalter (V1, V2) gleich ist.

## Claims

1. Electronic transformer for operating at least one low voltage halogen lamp (L),
having an inverter (3) with two switches (V1, V2) that can be switched on and switched off for making available an output a.c. voltage,
having a control circuit (uC) for controlling the switching on and switching off behaviour of the two switches (V1, V2) of the inverter, and
having a transformer (4, Tp, Ts1, Ts2) which is connected on the input side with the inverter (3) and to which on the output side there is connected a load circuit having the at least one low voltage halogen lamp (L),
**characterised in that**,
for dimming the at least one low voltage halogen lamp (L) the control circuit (uC) alters the duty ratio for both switches (V1, V2) **in that** the dead time (tₜₒₜ) between the opening of one of the two switches (v1) and the subsequent closing of the other switch (V2) remains constant and the switched on time (tₑᵢₙ) is shortened in each case.

2. Electronic transformer according to claim 1,
**characterised in that**,
the switching frequencies of the two switches (V1, V2) lie, independently of the degree of dimming, above the limit of human hearing.

3. Electronic transformer according to claim 2,
**characterised in that**,
the switching frequency of the two switches (V1, V2) at maximum dimming is about 10 times as high as the switching frequency in non-dimmed operation.

4. Electronic transformer according to claim 3,
**characterised in that**,
the switching frequencies of the two switches (V1, V2) lie between 35 kHz and 300 kHz.

5. Electronic transformer according to any preceding claim,
**characterised in that**,
the duty ratio for the two switches (V1, V2) is the same.

6. Method of operating at least one low voltage halogen lamp (L) by means of an electronic transformer, having
an inverter (3) with two switches (V1, V2) that can be switched on and switched off for making available an output a.c. voltage,
a control circuit (uC) for controlling the switching on and switching off behaviour of the two switches (V1, V2) of the inverter, and
a transformer (4, Tp, Ts1, Ts2) which is connected on the input side with the inverter (3) and to which on the output side there is connected a load circuit having the at least one low voltage halogen lamp (L),
**characterised in that**,
for dimming the at least one low voltage halogen lamp (L) the duty ratio for both switches (V1, V2) is altered **in that** the dead time (tₜₒₜ) between the opening of one of the two switches (v1) and the subsequent closing of the other switch (V2) remains constant and the switched on time (tₑᵢₙ) is shortened in each case.

7. Method according to claim 6,
**characterised in that**,
the switching frequencies of the two switches (V1, V2) lie, independently of the degree of dimming, above the limit of human hearing.

8. Method according to claim 6 or 7,
**characterised in that**,
the switching frequency of the two switches (V1, V2) at maximum dimming is about 10 times as high as the switching frequency in non-dimmed operation.

9. Method according to claim 8,
**characterised in that**,
the switching frequencies of the two switches (V1, V2) lie between 35 kHz and 300 kHz.

10. Method according to any of claims 5 to 9,
**characterised in that**,
the duty ratio for the two switches (V1, V2) is the same.

## Revendications

1. Transformateur électronique en vue du fonctionnement d'au moins une lampe halogène à basse tension (L), comprenant
un onduleur (3) équipé de deux commutateurs (V1,V2) pouvant être rendus conducteurs et non conducteurs en vue de l'établissement d'une tension alternative de sortie,
un circuit de commande (µC) en vue de la commande du fonctionnement de conduction et de non conduction des deux commutateurs (V1, V2) de l'onduleur, et
un transformateur (4, Tp, Ts1, Ts2),qui est relié côté entrée à l'onduleur (3) et est relié côté sortie à un circuit de charge présentant au moins une lampe halogène basse tension (L),
**caractérisé en ce que** le circuit de commande (µC) en vue de la gradation d'au moins une lampe halogène basse tension (L), dans lequel le rapport cyclique pour les deux commutateurs (V1, V2) est modifié de telle sorte que le temps mort (tₘₒᵣₜ) entre l'ouverture d'un des deux commutateurs (V1) et la fermeture suivante de l'autre commutateur (V2) demeure constant et le temps de conduction (t_{conduction}) est abrégé respectivement.

2. Transformateur électronique selon la revendication 1, **caractérisé en ce que** les fréquences de commutation des deux commutateurs (V1, V2) se trouvent indépendamment du degré de la gradation au-dessus de la limite audible de l'oreille humaine.

3. Transformateur électronique selon la revendication 2, **caractérisé en ce que** la fréquence de commutation des deux commutateurs (V1, V2) lors de la gradation maximale est environ 10 fois supérieure à la fréquence de commutation en fonctionnement sans gradation.

4. Transformateur électronique selon la revendication 3, **caractérisé en ce que** les fréquences de commutation des deux commutateurs (V1, V2) sont comprises entre 35 kHz et 300 kHz.

5. Transformateur électronique selon l'une quelconque des revendications précédentes, **caractérisé en ce que** le rapport cyclique pour les deux commutateurs (V1, V2) est identique.

6. Procédé de fonctionnement d'au moins une lampe halogène basse tension (L) à l'aide d'un transformateur électronique, comprenant
un onduleur (3) équipé de deux commutateurs (V1, V2) pouvant être rendus conducteurs et non conducteurs en vue de l'établissement d'une tension alternative de sortie,
un circuit de commande (µC) en vue de la commande du fonctionnement de conduction et de non conduction des deux commutateurs (V1, V2) de l'onduleur, et
un transformateur (4, Tp, Ts1, Ts2), qui est relié côté entrée à l'onduleur (3) et auquel est relié côté sortie un circuit de charge présentant au moins une lampe halogène basse tension (L),
**caractérisé en ce qu'**en vue de la gradation d'au moins une lampe halogène basse tension (L) le rapport cyclique pour les deux commutateurs (V1, V2) est modifié, de telle sorte que le temps mort (tₘₒᵣₜ) entre l'ouverture d'un des deux commutateurs (V1) et la fermeture suivante de l'autre commutateur (V2) demeure constant et le temps de conduction (t_{conduction}) est abrégé respectivement.

7. Procédé selon la revendication 6, **caractérisé en ce que** les fréquences de commutation des deux commutateurs (V1, V2) indépendamment du degré de la gradation se trouvent au-dessus de la limite audible de l'oreille humaine.

8. Procédé selon la revendication 6 ou 7, **caractérisé en ce que** la fréquence de commutation des deux commutateurs (V1, V2) lors d'une gradation maximale est environ 10 fois supérieure à la fréquence de commutation en fonctionnement sans gradation.

9. Procédé selon la revendication 8, **caractérisé en ce que** les fréquences de commutation des deux commutateurs (V1, V2) sont comprises entre 35 kHz et 300 kHz.

10. Procédé selon l'une des revendications 5 à 9, **caractérisé en ce que** le rapport cyclique est identique pour les deux commutateurs (V1, V2).
